# EUROPÄISCHE PATENTSCHRIFT

(11) **EP 1 928 802 B1**
(45) Veröffentlichungstag und Bekanntmachung des Hinweises auf die Patenterteilung: **23.08.2017**
(21) Anmeldenummer: 06792203.9
(22) Anmeldetag: 21.09.2006
(51) Int. Cl.: C04B 24/34, C04B 40/00

(54) **IN WASSER REDISPERGIERBARES PULVER, VERFAHREN ZU DESSEN HERSTELLUNG UND DESSEN VERWENDUNG**
POWDER REDISPERSIBLE IN WATER, PROCESS FOR PRODUCTION THEREOF AND USE THEREOF
POUDRE REDISPERSIBLE DANS L'EAU, PROCEDE POUR LA PREPARER ET SON UTILISATION

(30) Priorität: 27.09.2005 EP 05021009
(43) Veröffentlichungstag der Anmeldung: 11.06.2008
(60) Teilanmeldung: 11172104.9
(73) Patentinhaber: Akzo Nobel N.V., 6824 BM Arnhem (NL)
(72) Erfinder: ABERLE, Thomas, CH-6207 Nottwil (CH); KELLER, Adrian, CH-5102 Rupperswil (CH)
(74) Vertreter: Akzo Nobel IP Department
(86) Internationale Anmeldenummer: PCT/EP2006/009191
(87) Internationale Veröffentlichungsnummer: WO 2007/036324

(56) Entgegenhaltungen:
- EP-A- 0 799 876
- EP-B- 0 874 871
- WO-A-95/28361
- WO-A-97/38950
- DE-A1- 3 321 027
- DE-A1- 4 131 939
- DE-A1- 19 601 697
- GB-A- 1 088 485
- GB-A- 2 343 448
- TSUKAMOTO, A.: "Freeze- and efflorescence-resistant building boards" CHEMICAL ABSTRACTS + INDEXES, AMERICAN CHEMICAL SOCIETY. COLUMBUS, US, Bd. 112, Nr. 20, 14. Mai 1990 (1990-05-14), Seite 353, XP000151644 ISSN: 0009-2258
- DENKI KAGAKU KOGYO K.K.: "Efflorescence inhibitors for mortar and concrete" CHEMICAL ABSTRACTS + INDEXES, AMERICAN CHEMICAL SOCIETY. COLUMBUS, US, Bd. 102, Nr. 26, 1. Juli 1985 (1985-07-01), Seite 284, XP000183675 ISSN: 0009-2258

## Beschreibung

Die vorliegende Erfindung betrifft ein in Wasser redispergierbares Pulver zur Reduktion von Ausblühungen in hydraulisch abgebundenen Systemen auf Basis mindestens einer organischen Komponente und mindestens eines wasserlöslichen organischen polymeren Schutzkolloids, ein Verfahren zu dessen Herstellung, enthaltend eine Dispergierung mit anschliessender Trocknung, sowie dessen vorteilhafte Verwendung, insbesondere als Additiv für hydraulisch abbindende Systeme zur Reduktion von Ausblühungen in hydraulisch abgebundenen Systemen.

Ausblühungen sind insbesondere bei zementären Systemen wie Beton, Putze und Mörteln bekannt. Der Fachmann versteht darunter weissliche Ablagerungen an der Oberfläche, die vor allem durch herausgelöstes Calciumhydroxid entstehen, welches durch Kohlendioxid aus der Luft zu Calciumcarbonat weiterreagiert. Dabei können auch noch weitere Salzablagerungen vorliegen. Obwohl solche Ausblühungen in der Regel keinen nennenswerten Einfluss auf die physikalischen Werte des Substrates haben, werden sie doch vor allem bei eingefärbten oder grauen Oberflächen als sehr störend empfunden.

Oft versucht der Rezepturentwickler mangels Alternativen die Ausblühungen mittels hydrophober Additive zu unterbinden. Dabei spielt die Überlegung eine Rolle, dass wenn kein Wasser in die Mörtel-, Putz- oder Betonschicht eindringen kann, auch kein Calciumhydroxid ausgewaschen werden kann. Dies ist jedoch eine falsche Schlussfolgerung: Einerseits enthält das frisch aufgetragene Material noch viel Wasser, das zusammen mit gelösten Salzen zur Oberfläche hin migriert. Verdunstet das Wasser, bleiben die Salzrückstände als unerwünschte Rückstände zurück. Zudem kann auch Wasser von der anderen Seite her durch das hydraulisch abgebundene Material diffundieren und somit den gleichen Effekt aufweisen. Andererseits ist es praktisch unmöglich, eine absolute Hydrophobie zu haben. Selbst wenn die Oberfläche einen sehr guten Abperleffekt aufweist, reicht es aus, wenn nur wenig Wasser einpenetriert, um nach der Austrocknung des Wassertropfens einen weissen Rückstand zu hinterlassen. So zeigen dann manche stark hydrophobe Materialien einen stärkeren Ausblüheffekt als andere. Dies macht auch deutlich, dass Hydrophobie und Ausblühungen auf ganz unterschiedlichen Mechanismen beruhen und nicht miteinander vergleichbar sind.

So beschreibt beispielsweise die DE 103 23 205 A1 ein hydrophobierendes, in Wasser redispergierbares Additiv auf Basis von Fettsäuren und deren Derivate, welche wasserlösliche Schutzkolloide und ein oder mehrere Verbindungen aus der Gruppe von Fettsäuren und Fettsäurederivaten enthalten, die unter alkalischen Bedingungen Fettsäure oder das entsprechende Fettsäureanion freisetzen, gegebenenfalls in Kombination mit einer oder mehreren Organosilicium-Verbindungen. Durch den Einsatz dieses Additivs in Mörteln wird die Wasseraufnahme deutlich reduziert, aber nicht verhindert. Es wird nichts erwähnt über eine mögliche Reduktion der Ausblühungen. Zudem entstehen in der Regel durch die alkalische Hydrolyse der Fettsäurederivate unerwünschte, leicht flüchtige organische Komponenten (VOC).

Die US 3,423,219 beschreibt einen Prozess zur Herstellung von Portlandzement. Dabei wird bevorzugt eine wässrige Dispersion einer Mischung von Tallölharz und hochsiedenden Fraktionen von Tallöl dem Portlandzement als Mahlhilfsmittel zugemischt. Das Verfahren zur Herstellung solcher Dispersionen umfasst unter anderem eine alkalische Behandlung und ist daher kompliziert und teuer. Die Verwendung von solchen Systemen zur Reduktion von Ausblühungen wird nicht erwähnt. Zudem sind keine in Wasser löslichen oder redispergierbaren Pulver beschrieben, was den Einsatz insbesondere in Trockenmörteln verunmöglicht. Die GB 1,088,485 A beschreibt einen Prozess, um Ausblühungen bei Beton, basierend auf Portlandzement, zu inhibieren. Dabei wird bevorzugt eine wässrige Dispersion einer Mischung von Tallölharz und hochsiedenden Fraktionen von Tallöl, zum Teil auch mit Asphalt vermischt, entweder dem Beton zugemischt oder nachträglich auf die Oberfläche aufgebracht. Das Verfahren zur Herstellung solcher Dispersionen umfasst unter anderem eine alkalische Behandlung und ist daher sehr kompliziert und somit teuer, wobei die dunkle bis schwarze Farbe der Mischung deren Einsatzbereich stark einschränkt. Zur Stabilisierung der Dispersionen werden 0.1 bis 15 Gew.-% Proteine oder Polysaccharide eingesetzt. Zudem sind keine in Wasser löslichen oder redispergierbaren Pulver beschrieben, was den Einsatz insbesondere in Trockenmörteln verunmöglicht.

In der DE 33 21 027 A1 wird ein Verfahren beschrieben, wobei unter anderem auch eine Verminderung der Effloreszenz (Ausblühungen) und eine Verringerung der Wasseraufnahme eintreten soll. Dabei werden Terpenpolymere, insbesondere von flüssigen niedermolekularen Terpenen allein oder in Mischung mit anderen Terpenkohlenwasserstoffen, die den zementhaltigen Baustoffen in einer Menge von 0.1 - 10 Gew.-% zugesetzt werden, verwendet. Die Zugabe der Terpen-basierten Verbindungen erfolgt in emulgierter Form oder durch Aufsprühen von flüssigen oder gelösten Terpenen, was den Einsatz unter anderem in Trockenmörteln ausschliesst. Zudem wird nichts genaueres über die Art der eingesetzten Terpene sowie der Emulgatoren, anhand derer die Terpen-Verbindungen emulgiert werden, gesagt.

Die JP 1 252 652 A beschreibt eine wässrige Dispersion mit ausgezeichneter Stabilität für beispielsweise Papieranwendungen. Dazu wird eine hydrophobe Substanz mit niedrigem Molekulargewicht mit Hilfe eines modifizierten Polyvinylalkohols, welche eine spezielle kationische Gruppe enthält, dispergiert, wobei die hydrophobe Substanz mit niedrigem Molekulargewicht ein Harz sein kann. Die beschriebene wässrige Dispersion ist nur mit grösserem Aufwand herzustellen, da der Polyvinylalkohol mit kationischer Gruppe zuerst separat mittels radikalischer Polymerisation von Vinylacetat und beispielsweise Dimethylaminoethylvinylether mit nachfolgender Verseifung des Copolymers hergestellt werden muss. Zudem ist diese Dispersion nicht in Pulverform erhältlich und hat ein ganz anderes Anwendungsgebiet.

In der EP 874 871 B1 wird eine redispergierbare Dispersionspulver-Zusammensetzung beschrieben, welche ein wasserunlösliches Basispolymerisat aus der Gruppe der Homo- und Copolymerisate sowie ein wasserlösliches Verdüsungsschutzkolloid beinhaltet, welches auch bis zu 100 Gew.-%, bezogen auf das Basispolymerisat, klebrigmachende Substanzen enthält. Das wasserlösliche Verdüsungsschutzkolloid ist ein nicht-neutralisiertes oder ein teil-neutralisiertes Spezialpolymerisat auf Basis von Homo- oder Copolymerisaten von olefinisch ungesättigten Mono- oder Dicarbonsäuren oder deren Anhydriden, wobei der Säuregehalt der Polymere 50 Mol-% oder mehr beträgt. Der pH-Wert der wässrigen Redispersion liegt unterhalb 4.5. Diese Systeme können als Klebstoff-Zusammensetzung verwendet werden, sollen aber auch in zementhaltigen Spachtelmassen oder in Bauklebern Einsatz finden. Allerdings komplexieren diese Spezialpolymere in hydraulisch abbindenden Systemen schnell mit Calcium- und anderen Ionen, was sich stark negativ auf die Hydratation (starke Verzögerung) wie auch auf die Mörtel-Rheologie (Ansteiffen) auswirkt. Daher sind sie insbesondere in zementären Systemen weniger geeignet. Eine mögliche Reduktion von Ausblühungen ist nicht erwähnt.

Die EP 874 877 B1 beschreibt eine in Wasser redispergierbare Tackifierpulver-Zusammensetzung, enthaltend eine oder mehrere klebrigmachende Substanzen sowie 2 bis 50 Gew.-% mindestens einer Verbindung aus der Gruppe der wasserlöslichen, niedermolekularen Homo- oder Co-Polymerisate von olefinisch ungesättigten Mono- oder Dicarbonsäuren oder deren Anhydriden, welche als Copolymerisate noch 2 bis 50 Mol-% weiterer radikalisch polymerisierbarer Monomere enthalten, und Phenolsulfonsäure-, Melaminsulfonsäure- und Naphthalinsulfonsäurekondensate mit einer Wasserlöslichkeit von mindestens 10g in 100g Wasser und einem Molekulargewicht von höchstens 250'000 g/mol. Die klebrigmachenden Substanzen werden als Emulgator-stabilisierte Dispersionen eingesetzt und nicht mit diesen Polymerisaten stabilisiert. Zudem werden sie als Klebstoffe eingesetzt und nicht in zementären Systeme, insbesondere nicht zur Reduktion von Ausblühungen.

Die EP 799 876 A2 beschreibt eine pulverförmige Klebstoffzusammensetzung, die mindestens ein Polymerisat basierend auf mindestens einer Dispersion, mindestens ein klebrigmachendes Harz und gegebenenfalls ein oder mehrere Schutzkolloide sowie Antibackmittel enthält. Diese Klebstoffzusammensetzung eignet sich zum Verkleben von porösen und semiporösen Substraten, insbesondere als Fussbodenklebstoff. Ein Einsatz in hydraulisch abbindenden Systemen wird nicht erwähnt, insbesondere nicht der Einsatz zur Verminderung von Ausblühungen. Zudem ist es zwingend, dass ein Polymerisat basierend auf mindestens einer Dispersion enthalten ist, was die Formulierungsmöglichkeiten äusserst einschränkt.

Es war nun die Aufgabe der Erfindung, ein Additiv bereitzustellen, welches das Ausblühen von hydraulisch abgebundenen Systemen, insbesondere auf Basis von Zement, wie beispielsweise in Mörteln und bei Beton, unterbindet oder zumindest sehr stark reduziert. Zudem soll das Additiv insbesondere für die Formulierung von Trockenmörteln in Pulverform vorliegen um die bekannten Nachteile von flüssigen Rohstoffen, wie beispielsweise mangelnde Frost-Tau-Beständigkeit, oder limitierte Lagerbeständigkeit ohne Zusatz von toxischen Bioziden zu umgehen, sowie um eine einfache Dosierung bei Trockenmörtelformulierungen zu ermöglichen. Zudem ist es essentiell, dass sich dieses Additiv in die mit Wasser angerührte Mörtelmatrix einfach einrühren lässt, ohne dass spezielle Mischvorgänge beachtet werden müssen. Dabei spielt es auch eine sehr wichtige Rolle, dass sich das Additiv in der Mörtelmischung sehr gut benetzen, redispergieren und in der Matrix einfach homogen verteilen lässt. Zudem ist es wichtig, dass mit dem Additiv keine nachteiligen oder ganz andere Mörteleigenschaften erhalten werden, d. h. es soll möglich sein, das Additiv in bestehende Mörtelformulierungen zu geben, ohne dass sich deren Eigenschaften, wie beispielsweise die Mörtelrheologie, verändern, bis auf die gewünschte starke Reduktion des Ausblüheffektes, eine allfällige Verbesserung der Hydrophobie und/ oder Klebkraft des Mörtels. Das Additiv soll zudem unabhängig von anderen Mörtelrohstoffen dosiert werden können, was dem Formulierer eine sehr grosse Flexibilität ermöglicht. Weiter ist es wichtig, dass sich durch das Additiv die Rohstoff- und Herstellkosten des Trockenmörtels nicht oder nur geringfügig ändern. Bei der Herstellung des Additivs soll es zudem problemlos möglich sein, die Primärpartikelgrösse einfach zu variieren, um so die Endeigenschaften gezielt einstellen zu können. Weiter ist es vorteilhaft, wenn sich zumindest ein grösserer Anteil des Additivs aus nachwachsenden Rohstoffen einfach gewinnen lässt. Zudem soll das Additiv keine oder nur eine sehr geringe Gefahrstoffklassifizierung aufweisen.

Die komplexe Aufgabe konnte überraschenderweise gelöst werden mit einem in Wasser redispergierbaren Pulver zur Reduktion von Ausblühungen in hydraulisch abgebundenen Systemen erhältlich nach dem Verfahren gemäß mindestens einem der Ansprüche 1 bis 9. Die organische Komponente mit einer ganz oder teilweise gesättigten cyclischen Gruppe kann ein synthetisch hergestelltes Produkt oder ein Naturprodukt sein. Als Naturprodukt eignen sich insbesondere Harze wie Balsamharz, Wurzelharz, Tallharz und/ oder Polyterpenharze, wobei diese in modifizierter und/ oder unmodifizierter Form vorliegen können, wobei die Modifikation natürlichen oder synthetischen Ursprungs sein kann. Als Terpenoide sind Monoterpene, Sesquiterpene, Diterpene, Sesterterpene, Triterpene, Tetraterpene sowie Polyterpene bevorzugt. Terpenharze werden typischerweise durch Polymerisation von Terpenen, Diterpenen und/ oder Limonen gewonnen und Terpen-Phenol-Harze können durch Säure-katalysierte Addition von Phenolen an Terpene und/ oder Kolophonium hergestellt werden, aber auch auf einer anderen Basis beruhen.

Es ist wichtig, dass die organische Komponente mindestens eine cyclische Gruppe enthält. Bevorzugt sind mono-, di-, tri-, tetra- und/ oder pentacyclische Gruppen. Eine spezielle Ausführungsform sind organische Komponenten, welche mindestens eine cyclische Gruppe mit einem C₅- und/ oder C₆- Ring enthalten. Zudem kann die cyclische Gruppe ganz oder teilweise gesättigt sein. Eine spezielle Ausführungsform enthält zwei oder mehr C=C Doppelbindungen, wobei bevorzugt mindestens zwei miteinander konjugiert sind.

Die organische Komponente kann zudem mindestens eine Verbindung mit einer oder mehreren funktionellen Gruppen enthalten, wie beispielsweise Amin-, Amid-, Amidin-, Imin-, Anhydrid-, Ester-, Sulfat-, Sulfonat- und/ oder Thiol-Gruppen. Ganz besonders bevorzugt sind Verbindungen mit Carboxyl-, Carbonyl-, Aldehyd- und/ oder AlkoholGruppen, wobei Harzsäuren und deren Derivate speziell bevorzugt sind.

Als geeignete organische Komponenten eignen sich beispielsweise Monoterpene wie Campher, Camphersäure, Isonitrosocampher, Campherchinon, Menthol, Limonen, Pinen, Camphercarbonsäure und/ oder Alkylhydroxymethylencampher sowie deren Derivate sowie damit hergestellte Polymere wie Polyterpenharze, Diterpene wie beispielsweise Neoabietinsäure, Lävopinarsäure, Pimarsäure, Isopimarsäure, Abietinsäure, Dehydroabietinsäure, Dihydroabietinsäure, Sylvinsäure, Palustrinsäure, Kolophonium, Retinal, Tretinoin, Agelasin E, Agelasidin B, Oxocativinsäure, Pinifolsäure, Labdendisäure, Dihydroxyhalimadiensäure, Epoxyclerodatriensäure, Isopimaradiensäure, Isopimarsäure, Isopimaradiendiol, Isopimaratrientriol, Junceinsäure, Podocarpinsäure, Podocarpinol, Rosein III, Hydroxyoxorosenolid, Cassainsäure, Cassaidin, Cassain, Cassamin, Auricularsäure, Cleistanthadiensäure, Isocopalendial, Abtietadiensäure, Abietsäure, Dihydroxyabtietatriensäure, Lanugon A, Carnosolsäure, abeo-Abietan, Coleon P, Cycloabietan, Beyerentriol, Beyerol, Hydroxybeyerensäure, Dihydroxykaurensäure, Dihydroxykaurenolid, Kahweol, Methylbutanoyloxyvillanovandiol, Dihydroxyatisenolid, Dihydroxyatisanon, Atisendiol, Gibberellin A₁₈, Gibberellin A₁, Gibberellin A₃, Giberellinsäure, Grayanotoxenpentol, Leucothol, Epoxygrayanotoxanpentol, Rhodojaponin III, Leucothol C, Xeniolit A, Xeniaacetal, und/ oder Dihydroxyserrulatansäure, Isodictyohemiacetal, sowie deren Derivate, Sesterterpene wie beispielsweise Dysideapalaunsäure, Dalvisyriacolid, Salvileucolidmethylester, Epoxyhydroxyoxoophioboladienal, Oxoophiobolatetraenal, Ophiobolin A, Ophiobolin G, Dihydroxyscalarenolid und/ oder Scalarin, sowie deren Derivate, Triterpene wie beispielsweise Dipterocarpol, Hydroxydammarenon II, Dammarenolsäure, Tirucallol, Ursonsäure, Oleanonsäure, Isomasticadienonsäure, Fusidinsäure, Acetoxydihydroxyfusidadiensäure, Helvolininsäure, Masticadienonsäure, Diacetoxydioxofusidadiensäure, Trihydroxycycloartensäure, Ananassäure, Passiflorin, Acetoxytrihydrioxycucrbitadientrion, Cucurbitacin B, Cucurbitacin F, Ursolsäure, Pentahydroxycucurbitadiendion, Hydroxyursansäure, Hydroxyursensäure, Pomolsälure, Hydroxyoleanensäure, Dihydroxyursensäure, Boswellinsäure, Hydroxyursensäure und/ oder Hydroxyoxoursensäure, sowie deren Derivate, wobei die aufgeführten Komponenten auch als Mischung vorliegen können und keinesfalls als limitierende Auswahl verstanden werden dürfen. Ganz speziell bevorzugt sind Harzsäuren, insbesondere Neoabietinsäure, Lävopinarsäure, Pimarsäure, Isopimarsäure, Abietinsäure, Dehydroabietinsäure, Dihydroabietinsäure, Sylvinsäure, Palustrinsäure und/ oder Kolophonium.

Die organische Komponente soll einen Schmelzpunkt, ermittelt mittels DSC (DIN 51007), von etwa -20 bis 250 °C, insbesondere von etwa 0 bis 200 °C und ganz besonders bevorzugt von etwa 50 bis 180 °C aufweisen. Falls die organische Komponente einen Schmelzbereich und nicht einen eigentlichen Schmelzpunkt aufweist, wird die mittlere Temperatur des Schmelzbereiches zur Bestimmung des Schmelzpunktes herangezogen. Kann beispielsweise wegen thermischer Zersetzung kein Schmelzpunkt ermittelt werden, kann hilfsweise auch der Erweichungspunkt, respektive die mittlere Temperatur des Erweichungssbereiches anstelle des Schmelzpunktes verwendet werden. Zudem soll das Molekulargewicht der organischen Komponente zwischen etwa 100 bis 10'000, insbesondere zwischen etwa 200 bis 5000 und ganz besonders bevorzugt zwischen etwa 300 bis 2500 liegen. Dieses wird typischerweise bei niedermolekularen Verbindungen über die Strukturformel und bei höhermolekularen Produkten mittels statischer Lichtstreuung bestimmt.

Die organische Komponente ist typischerweise in Wasser unlöslich oder nur leicht löslich. In einer speziellen Ausführungsform ist sie im sauren bis neutralen Wasser nicht oder nur leicht löslich, wobei die Löslichkeit kleiner als etwa 10 Gew.-%, bevorzugt kleiner als etwa 1 Gew.-% und insbesondere kleiner etwa 0.1 Gew.-% beträgt. In einer weiteren bevorzugten Ausführungsform ist die organische Komponente in verdünnter Natronlauge teilweise oder ganz löslich, wobei die Löslichkeit bei einem pH im Bereich von etwa 8 bis 12 grösser als etwa 0.01 Gew.-%, bevorzugt grösser als etwa 0.1 Gew.-% und insbesondere grösser als etwa 1 Gew.% beträgt. Die Löslichkeiten beziehen sich auf eine Temperatur von 20°C.

Es ist hilfreich, dass das wasserlösliche organische polymere Schutzkolloid mit der organischen Komponente in wässriger Lösung eine stabile Dispersion bildet, welche auch nach 24 Stunden noch die gleichen physikalischen Eigenschaften wie beispielsweise pH, Viskosität, Teilchengrösse und Farbe besitzt sowie dass keine Separierung, d.h. Absetzen von Dispersionspartikeln, auftritt. Da je nach Art der organischen Komponente verschiedene wasserlösliche organische polymere Schutzkolloide die gewünschte Dispersionsstabilität ergeben, kann ein organisches polymeres Schutzkolloid für bestimmte organische Komponenten ideal sein, während mit anderen organischen Komponenten eine Inkompatibilität auftreten kann. Deshalb muss das organische polymere Schutzkolloid auf die organische Komponente abgestimmt werden. Bevorzugt sind Stabilisierungssysteme, welche es auf einfache Art erlauben, die erhaltene wässrige Dispersionszusammensetzung mittels Trocknung in Pulver zu überführen, welche in Wasser redispergierbar sind.

Typischerweise geeignete wasserlösliche organische polymere Schutzkolloide sind bevorzugt höhermolekulare Verbindungen. Darunter fallen natürliche Verbindungen wie Polysaccharide, welche gegebenenfalls chemisch modifiziert sind, synthetische höhermolekulare Oligomere sowie Polymerisate, die nicht oder nur schwach ionischen Charakter haben, und/ oder Polymerisate, welche mittels Monomeren, die zumindest zum Teil ionischen Charakter haben, beispielsweise mittels radikalischer Polymerisation in wässrigem Medium in-situ hergestellt werden. Es ist auch möglich, dass nur ein Stabilisierungssystem verwendet wird oder verschiedene Stabilisierungssyteme miteinander kombiniert werden.

Bevorzugt einsetzbare Polysaccharide und deren Derivate sind kaltwasserlösliche Polysaccharide und Polysaccharidether, wie Celluloseether, Stärkeether (Amylose und/ oder Amylopectin und/ oder deren Derivate), Guarether und/ oder Dextrine. Es können auch synthetische Polysaccharide wie anionische, nonionische oder kationische Heteropolysaccharide, insbesondere Xanthan Gum oder Wellan Gum verwendet werden. Die Polysaccharide können, müssen aber nicht, chemisch modifiziert sein, beispielsweise mit Carboxymethyl-, Carboxyethyl-, Hydroxyethyl-, Hydroxypropyl-, Methyl-, Ethyl-, Propyl- und/ oder langkettigen Alkylgruppen. Weitere natürliche Stabilisierungssysteme sind Alginate, Peptide und/ oder Proteine wie beispielsweise Gelatine, Casein und/ oder Soja-Protein. Ganz besonders bevorzugt sind Dextrine, Stärke, Stärkeether, Casein, Soja-Protein, Hydroxyalkyl-Cellulose und/ oder AlkylHydroxyalkyl-Cellulose.

Synthetische Stabilisierungssysteme können aus einem oder mehreren Schutzkolloiden bestehen. Beispielsweise sind dies ein oder mehrere Polyvinylpyrrolidone und/ oder Polyvinylacetale mit Molekulargewichten von 2000 bis 400'000, voll- oder teilverseifte und/ oder modifizierte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 50 mPas, insbesondere von etwa 3 bis 40 mPas (gemessen bei 20°C nach DIN 53015) sowie Blockcopolymerisate von Propylenoxid und Ethylenoxid, Styrol-Maleinsäure- und/ oder Vinylether-Maleinsäure-Copolymerisate. Höhermolekulare Oligomere können nicht-ionische, anionische, kationische und/ oder amphotere Emulgatoren sein, wie beispielsweise Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen sowie Ester von Sulfobernsteinsäure, quarternäre Alkylammonium-Salze, quarternäre Alkylphosphonium-Salze, Polyadditionsprodukte wie Polyalkoxylate, beispielsweise Addukte von 5 bis 50 Mol Ethylenoxid und/ oder Propylenoxid pro Mol an lineare und/ oder verzweigte C₆- bis C₂₂-Alkanole, Alkylphenole, höhere Fettsäuren, höhere Fettsäureamine, primäre und/ oder sekundäre höhere Alkyl-Amine, wobei die Alkylgruppe jeweils bevorzugt eine lineare und/ oder verzweigte C₆- bis C₂₂-Alkylgruppe ist. Ganz besonders bevorzugt sind synthetische Stabilisierungssysteme, insbesondere teilverseifte, gegebenenfalls modifizierte, Polyvinylalkohole, wobei ein oder mehrere Polyvinylalkohole zusammen eingesetzt werden können, gegebenenfalls mit geringen Mengen von geeigneten Emulgatoren. Bevorzugte synthetische Stabilisierungssysteme sind insbesondere modifizierte und/ oder unmodifizierte Polyvinylalkohole mit einem Hydrolysegrad von 80 bis 98 Mol-% und einer Höpplerviskosität als 4%ige wässrige Lösung von 1 bis 50 mPas und/ oder Polyvinylpyrrolidon. Weniger bevorzugt sind jedoch wasserlösliche organische polymere Schutzkolloide mit einem erhöhten Gehalt an Carbonsäure-Gruppen, insbesondere wenn sie mittels radikalischer Polymerisation hergestellt werden. So soll der Gehalt an Mono- und Dicarbonsäuren sowie deren Anhydriden von weniger als 50 Mol-%, bevorzugt von weniger als 25 Mol-% und insbesondere weniger als 10 Mol-% betragen. Das wasserlösliche organische polymere Schutzkolloide besteht nicht aus aromatischen Sulfonsäurekondensaten.

Das Gewichtsverhältnis der organischen Komponente zum wasserlöslichen organischen polymeren Schutzkolloid hängt vor allem von den eingesetzten Materialien und den zu erzielenden Effekten ab. Es kann von etwa 95 : 5 bis 5 : 95 betragen, insbesondere von etwa 90 : 10 bis 10 : 90, und bevorzugt von etwa 80 : 20 bis 20 : 80. und ganz besonders bevorzugt von etwa 70 : 30 bis 30 : 70.

Der pH-Wert des in Wasser redispergierten Pulvers beträgt als 10%-ige wässrige Redispersion typischerweise etwa 4.5 bis 10.5, bevorzugt etwa 5.0 bis 9.5, kann jedoch in Spezialfällen, wie etwa bei Zugabe stark saurer oder alkalischer Komponenten auch ausserhalb dieses Bereiches liegen.

Das erfindungsgemässe, in Wasser redispergierbare Pulver kann auch weitere Additive enthalten. Der Gehalt an Additiven, bezogen auf die Summe der organischen Komponente und dem wasserlöslichen organischen polymeren Schutzkolloid, unterliegt keinen kritischen Grenzen. So kann er für beispielsweise grenzflächenaktive Substanzen sehr klein sein und im Rahmen von etwa 0.01 Gew.-% oder mehr, insbesondere etwa 0.1 Gew.-% und bevorzugt etwa 1 Gew.-% liegen. Auf der anderen Seite können dem erfindungsgemässen Pulver auch wesentlich grössere Anteile an Additiven beigemischt werden, wie beispielsweise Füllstoffe oder in Wasser redispergierbare filmbildende Dispersionspulver, welche typischerweise durch Trocknung von synthetisch hergestellten, filmbildenden wässrigen polymeren Dispersionen auf Basis von Emulsionspolymerisaten erhalten werden. In diesem Fall können auf einen Teil des erfindungsgemässen, in Wasser redispergierbaren Pulvers bis zu etwa 1000 Teile, insbesondere etwa 500 Teile und bevorzugt etwa 100 Teile an weiteren Additiven zugegeben werden.

Der Art der weiteren Additive sind keine besonderen Grenzen gesetzt. In der Regel haben sie eine wichtige Funktion in der Anwendung des erfindungsgemässen Pulvers, was aber nicht zwingend ist. Es können auch durchaus noch weitere organische polymere Schutzkolloide zugegeben werden, wobei deren Zugabe in diesem Fall bevorzugt pulverförmig erfolgt.

Bevorzugte Additive sind pulverförmige und/ oder flüssige Entschäumer, Netzmittel, Alkyl-, Hydroxyalkyl- und/ oder Alkylhydroxyalkyl-Polysaccharidether wie Celluloseether, Stärkeether und/ oder Guarether, wobei die Alkyl- und Hydroxyalkylgruppe typischerweise eine C₁- bis C₄- Gruppe ist, synthetische Polysaccharide, wie anionische, nonionische oder kationische Heteropolysaccharide, insbesondere Xanthan Gum oder Wellan Gum, Cellulosefasern, Dispergiermittel, Zementverflüssiger, Abbindebeschleuniger, Erstarrungsbeschleuniger, Abbindeverzögerer, Luftporenbildner, Polycarboxylate, Polycarboxylatether, Polyacrylamide, voll- und/ oder teilverseifte, und gegebenenfalls modifizierte, Polyvinylalkohole, Polyvinylpyrrolidone, Polyalkylenoxide und Polyalkylenglykole, wobei die Alkylengruppe typischerweise eine C₂- und/ oder C₃- Gruppe ist, wozu auch Blockcopolymerisate zählen, Dispersionen und in Wasser redispergierbare filmbildende Dispersionspulver auf Basis von Emulsionspolymerisaten enthaltende Copolymerisate, wie beispielsweise auf Basis von Vinylacetat, Ethylen-Vinylacetat, Ethylen-Vinylacetat-Vinylversatat, Ethylen-Vinylacetat-(Meth)Acrylat, Ethylen-Vinylacetat-Vinylchlorid, Vinylacetat-Vinylversatat, Vinylacetat-Vinylversatat-(Meth)acrylat, Vinylversatat-(Meth)acrylat, Rein(Meth)Acrylat, Styrol-Acrylat und/ oder Styrol-Butadien, Hydrophobierungsmittel, wie Silane, Silanester, Siloxane, Silicone, Fettsäuren und/ oder Fettsäureester, Verdickungsmittel, Füllstoffe wie quarzitische und/ oder carbonatische Sande und/ oder Mehle wie beispielsweise Quarzsand und/ oder Kalksteinmehl, Carbonate, Silikate, Schichtsilikate, gefällte Kieselsäuren, Leichtfüllstoffe wie Mirohohlkugeln aus Glas, Polymere wie beispielsweise Polystyrolkugeln, Alumosilikate, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calcium-metasilikat und/ oder vulkanische Schlacke sowie Puzzolane wie Metakaolin und/ oder latenthydraulische Komponenten. Ganz speziell bevorzugte Additive sind Polymerdispersionen, in Wasser redispergierbare filmbildende Dispersionspulver, Polysaccharidether, Verflüssiger und Hydrophobierungsmittel, insbesondere Silane, Silanester, Fettsäuren, Fettsäureester und/ oder Ölsäure und deren Ester sowie andere Derivate.

Die Erfindung betrifft auch ein Verfahren zur Herstellung von in Wasser redispergierbaren gemäß Anspruch 1, wobei die organische Komponente in einem ersten Schritt mit dem wasserlöslichen organischen polymeren Schutzkolloid in Wasser dispergiert und stabilisiert wird und die erhaltene Dispersion anschliessend getrocknet wird.

Dabei ist es vorteilhaft, aber keinesfalls zwingend, wenn die organische Komponente in flüssiger oder zäh-flüssiger Form mit dem in Wasser vorgelösten organischen polymeren Schutzkolloid vermischt wird. Wenn die organische Komponente bei Raumtemperatur in fester Form vorliegt, kann es daher hilfreich sein, wenn diese erwärmt wird. Es ist jedoch auch möglich, dass die organische Komponente, insbesondere wenn sie in Wasser unlöslich ist, in einem zuzugebenden Additiv gelöst oder gequollen wird und in dieser Form mit der wässrigen Phase mit dem organischen polymeren Schutzkolloid vermischt wird. Geeignete Additive sind oft rein organischer Natur und liegen in flüssiger Form vor. Es sind dies beispielsweise Silane, Silanester, Silikone und/ oder Siloxane, fllüssige Entschäumer und/ oder Netzmittel, niedermolekulare Polyalkylenglykole, Fettsäuren und/ oder Fettsäurederivate.

Als Silane, Silanester, Silikone und/ oder Siloxane, können grundsätzlich alle Organosiliciumverbindungen eingesetzt werden. Es ist jedoch von Vorteil, jedoch nicht zwingend, wenn sie in flüssiger Form vorliegen und der Siedepunkt bei Normaldruck der eingesetzten Organosiliciumverbindung nicht zu niedrig ist, bevorzugt etwa 100 °C oder mehr. Die Organosiliciumverbindungen können in Wasser löslich, unlöslich oder nur teilweise löslich sein. Bevorzugt sind dabei Verbindungen, welche keine oder nur eine limitierte Wasserlöslichkeit besitzen. Es können Kieselsäureester mit der Formel Si(OR')₄, Organoxysilane der Formel Siₙ(OR')₄₋ₙ mit n = 1 bis 3, Polysilane der Formel R₃Si(SiR₂)ₙSiR₃ mit n = 0 bis 500, wobei n = 0 bis 8 bevorzugt ist, Di-, Oligo- und Polysiloxane aus Einheiten der allgemeinen Formel R_{c}H_{d}Si(OR')ₑ(OH)_{f}O_{(4-c-d-e-f)/2} mit c = 0 bis 3, d = 0 bis 2, e = 0 bis 3, f = 0 bis 3 und die Summe c+d+e+f je Einheit höchstens 3.5 ist, wobei R' für gleiche oder verschiedene Alkylreste oder Alkoxyalkylenreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atomen, Cycloakylreste mit 3 bis 10 C-Atomen, Alkylenreste mit 2 bis 4 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether-, Ester-, Amid-, Nitril-, Hydroxyl, Amin-, Carboxyl-, Sulfonsäure-, Carbonsäureanhydrid- und Carbonylgruppen substituiert sein können, wobei im Falle der Polysilane R auch die Bedeutung OR' haben kann.

Bevorzugte Organosiliciumverbindungen sind Tetraalkoxysilane, Alkyltrialkoxysilane, Dialkyldialkoxysilane, wobei als Alkylgruppen lineare und/ oder verzweigte C₁- bis C₂₀-Alkylgruppen und als Alkoxygruppen lineare und/ oder verzweigte C₁- bis C₁₀-Alkoxygruppen verwendet werden können, wobei als letztere bevorzugt Methoxy-, Ethoxy- und/ oder iso-Propoxygruppen verwendet werden. Zudem kann anstelle einer Alkylgruppe auch eine copolymerisierbare Alkylengruppe wie beispielsweise eine vinyl-, allyl- und/ oder (meth)acryl- Gruppe eingesetzt werden. Nicht limitierende Beispiele sind Vinylmethyldialkoxysilan, Tetraethoxysilan, Methyltripropoxysilan, Methyltriethoxysilan, γ-Chlorpropyltriethoxysilan, β-Nitrilethyltriethoxysilan, γ-Mercaptopropyltriethoxy- und - trimethoxysilan, Phenyltriethoxysilan, n- sowie iso-Octyltriethoxysilan, Dipropyldiethoxysilan, Triphenylsilanol sowie deren vorzugsweise flüssigen Kondensationsprodukte, gegebenenfalls mit anderen niedrigsiedenden und/ oder wasserlöslichen Silanen, wie Methyltrimethoxysilan, γ-Aminopropyltriethoxysilan oder anderen Aminofunktionen enthaltenden Silanen, quartäre Ammoniumsalzgruppen und/ oder Epoxygruppen enthaltende Silane, Carbonsäure- und Carbonsäureanhydrid funtionelle Silane, Disilane wie Dimethyltetraalkoxydisilan, Tetramethyldialkoxydisilan, Trimethyltrialkoxydisilan oder deren im allgemeinen aus den entsprechenden Chlorverbindungen erhältlichen (Co)kondensate. Besonders bevorzugt sind auch durch Trimethylsiloxygruppen endblockierte Methylhydrogenpolysiloxane, durch Trimethylsiloxygruppen endblockierte Mischpolymere aus Dimethylsiloxan- und Methylhydrogensiloxan-Einheiten und in den endständigen Einheiten je eine Sigebundene Hydroxylgruppe aufweisende Dimethylpolysiloxane.

Um die organische Komponente mit wasserlöslichen organischen polymeren Schutzkolloiden in Wasser zu dispergieren sind in der Regel mittlere bis starke Scherkräfte hilfreich und oft auch notwendig. Sie kann batchweise, kontinuierlich wie beispielsweise über statische Mischer, oder semi-kontinuierlich sowohl bei Raumtemperatur als auch bei erhöhter Temperatur erfolgen. Besitzt die organische Komponente einen erhöhten Schmelzpunkt, und wird sie vorgängig nicht in einer anderen flüssigen Substanz gelöst, kann die Dispergierung auch bei Temperaturen von mehr als 100 °C erfolgen, wobei dann bevorzugt bei erhöhtem Druck gearbeitet wird. Um eine teilweise oder vollständige Zersetzung der organischen Komponente zu vermeiden, kann bei Bedarf auch unter Schutzgasatmosphäre gearbeitet werden.

Bei der Dispergierung der organischen Komponente in dem wasserlöslichen organischen polymeren Schutzkolloid kann durch gezielte Einstellungen der verschiedenen Parametern insbesondere die Partikelgrösse der erzielten Dispersion variiert werden. Dazu gehören auch die Art und Menge des wasserlöslichen organischen polymeren Schutzkolloids. Bei sehr kleiner Partikelgrösse wird schon mit geringsten Mengen eine sehr effiziente Verteilung der eingesetzten Matrix erreicht. Ist die Partikelgrösse grösser, entfaltet das redispergierte Material seine Wirkung über einen längeren Zeitraum. Daher ist es oft bevorzugt, eine multimodale Partikelgrössenverteilung zu haben, um sowohl eine grosse Effizienz, wie auch eine lange andauernde Wirkung zu haben. So kann die mittlere Partikelgrösse der in der Dispersion dispergierten Teilchen typischerweise zwischen etwa 0.05 und 50 µm, insbesondere zwischen etwa 0.1 und 20 µm und bevorzugt zwischen etwa 1 und 10 µm liegen, wobei darauf zu achten ist, dass insbesondere bei niederviskosen Dispersionen die Partikelgrösse nicht zu gross ist, um eine Sedimentation zu verhindern. Dies spielt bei höher viskosen Dispersionen weniger eine Rolle.

Bezüglich des Feststoffgehalts der mit dem wasserlöslichen organischen polymeren Schutzkolloid stabilisierten Dispersion der organischen Komponente unterliegt die Erfindung keinerlei kritischen Grenzen. Es ist jedoch in der Regel von Vorteil, wenn der Feststoffgehalt etwa 10 bis 75 Gew.-%, insbesondere etwa 25 bis 65 Gew.-% und bevorzugt zwischen etwa 40 und 55 Gew.-% liegt. Die erhaltene Dispersion besitzt zudem bei 23°C typischerweise eine Brookfieldviskosität, gemessen bei 23°C und 20 Upm nach DIN 53019, von etwa 100 bis 50'000 mPas, insbesondere etwa 500 bis 25'000 mPas und bevorzugt etwa 1000 bis 10'000 mPas

Die Trocknung der erhaltenen wässrigen Dispersion erfolgt mittels Sprühtrocknung, Gefriertrocknung, Fliessbetttrocknung, Walzentrocknung und/ oder Schnelltrocknung, wobei die Sprühtrocknung besonders bevorzugt ist und die Versprühung beispielsweise mittels Sprührad, Ein- oder Mehrstoff-Düse erfolgen kann. Falls notwendig, kann die wässrige Dispersion dazu noch mit Wasser verdünnt werden, um eine für die Trocknung geeignete Viskosität zu erhalten. Der Trocknungstemperatur sind grundsätzlich keine besonderen Grenzen gesetzt. Insbesondere aus sicherheitstechnischen Überlegungen soll sie jedoch in der Regel etwa 200°C, insbesondere etwa 175°C nicht übersteigen. Um eine genügend effiziente Trocknung zu erzielen, sind Temperaturen von etwa 110°C oder höher, insbesondere etwa 120°C oder höher bevorzugt.

Das erfindungsgemässe Verfahren beinhaltet auch die Zugabe von weiteren Additiven, die je nach Art und/ oder prozesstechnischen Möglichkeiten beispielsweise zunächst mit der organischen Komponente und/ oder mit dem wasserlöslichen organischen polymeren Schutzkolloid vermischt werden, der erhaltenen wässrigen Dispersion zugegeben werden und/ oder als Pulver während und/ oder nach der Trocknung dem erhaltenen Pulver beigemischt werden. Flüssige Additive können aber auch während oder nach der Trocknung auf das Pulver gesprüht werden. Bevorzugt werden die flüssigen und/ oder wasserlöslichen Additive vor, während oder nach dem Dispergieren zugegeben und pulverförmige Additive werden bevorzugt während oder nach der Trocknung mit dem erhaltenen Pulver vermischt. Bevorzugte flüssige und/ oder wasserlösliche Additive sind Silane, Silanester, Siloxane, Fettsäuren und/ oder deren Derivate, Netzmittel, Entschäumer, Steuerungsmittel für die Zementhydratation und/ oder zum Einstellen der Rheologie wie Abbindeverzögerer, Abbindebeschleuniger, Zementverflüssiger, Zementverdicker, Luftporenbildner und/ oder filmbildende wässrige polymere Dispersionen auf Basis von Emulsionspolymerisaten. Bevorzugte pulverförmige Additive sind Füllstoffe, Antibackmittel, in Wasser redispergierbare filmbildende Dispersionspulver auf Basis von Emulsionspolymerisaten, Polysaccharidether wie beispielsweise Celluloseether, Stärkeether und/ oder Guarether, Steuerungsmittel für die Zementhydratation und/ oder Rheologie wie Abbindeverzögerer, Abbindebeschleuniger, Zementverflüssiger sowie Zementverdicker, Luftporenbildner, Cellulosefasern, Dispergiermittel, Polyacrylamide, Polycarboxylatether, pulverförmige Hydrophobierungsmittel, insbesondere auf Basis von Silanen, Silanester, und/ oder Siloxanen, Verdickungsmittel, Füllstoffe, wie Carbonate, Silikate, Metakaoline, und/ oder latenthydraulische Komponenten. Der Anteil solcher Additive kann für beispielsweise grenzflächenaktive Substanzen sehr klein sein und im Rahmen von etwa 0.01 Gew.-% oder mehr, insbesondere etwa 0.1 Gew.-% und bevorzugt etwa 1 Gew.-%, liegen, bezogen auf den Anteil am erfindungsgemässen Additiv. Für andere Additive, wie beispielsweise Füllstoffe oder in Wasser redispergierbare filmbildende Dispersionspulver auf Basis von Emulsionspolymerisaten, kann dieser bis zu etwa 1000 Teile, insbesondere etwa 500 Teile und bevorzugt etwa 100 Teile betragen, bezogen auf ein Gewichtsteil der Summe der organischen Komponente und des wasserlöslichen organischen polymeren Schutzkolloids.

Eine spezielle Ausführungsform ist ein Verfahren, bei dem die erhaltene wässrige Dispersion gemeinsam mit filmbildenden wässrigen polymeren Dispersionen auf Basis von Emulsionspolymerisaten getrocknet werden, wobei in Wasser redispergierbare filmbildende Dispersionspulver erhalten werden, welche das Ausblühen in hydraulisch abgebundenen Systemen stark reduzieren und gegebenenfalls sogar ganz unterbinden. Zudem kann bei Bedarf die wässrige Dispersion auch anderen zu trocknenden Dispersionen zugegeben werden, insbesondere solchen zur Hydrophobierung der hydraulisch abgebundenen Massen, beispielsweise zu Dispersionen auf Basis von Silanen, Silanestern, Siloxanen, Silikonen, Fettsäuren und/ oder Fettsäureester, wobei nach der Trocknung pulverförmige, in Wasser redispergierbare Hydrophobierungsmittel erhalten werden, welche das Ausblühen in hydraulisch abgebundenen Systemen stark reduzieren und gegebenenfalls sogar ganz unterbinden. Dabei ist es möglich, die zu trocknenden Dispersionen vor der Trocknung miteinander zu vermischen und gemeinsam zu versprühen und zu trocknen, oder aber gleichzeitig über eine Zweistoff- oder Mehrstoffdüse getrennt zu versprühen und anschliessend gleichzeitig miteinander zu trocknen. Besitzt die andere zu trocknende Dispersion einen genügend hohen Anteil an wasserlöslichem organischen polymeren Schutzkolloid, sodass noch freies Schutzkolloid zur Verfügung steht, kann die organische Komponente auch als emulgatorstabilisierte Dispersion gemeinsam mit der anderen Dispersion getrocknet werden. Das Gewichtsverhältnis der organischen Komponente zu freiem Schutzkolloid muss mindestens etwa 95 : 5, bevorzugt mindestens etwa 90 : 10 betragen. Das zur Herstellung von in Wasser redispergierbaren filmbildenden Dispersionspulver verwendete wasserlösliche organische polymere Schutzkolloid wird so ausgewählt, dass dessen Gehalt an Mono- und Dicarbonsäuren sowie deren Anhydriden kleiner als 50 Mol-% beträgt. Das Verhältnis der beiden zu trocknenden Dispersionen kann gemäss dem zu erzielenden Effekt beliebig eingestellt werden. So kann der Feststoffanteil der erfindungsgemässen Dispersion, bezogen auf das gemeinsam getrocknete Pulver, etwa 0.1 bis 99 Gew.-%, bevorzugt etwa 1 bis 95 Gew.-%, und insbesondere etwa 5 bis 80 Gew.-% betragen.

Das erhaltene in Wasser redispergierbare Pulver zeigt in Wasser typischerweise eine sehr gute Benetzbarkeit und Redispergierbarkeit. Idealerweise redispergiert es schon bei Kontakt mit Wasser innerhalb von wenigen Sekunden, allenfalls durch leichtes Umrühren. In gewissen Fällen ist es auch möglich, dass etwas stärkere Scherkräfte notwendig sind. Jedenfalls genügen in der Regel die bei normal durchgeführten Anrührprozessen von Trockenmörteln auftretenden Scherkräfte um das erfindungsgemässe Pulver vollständig zu redispergieren und um eine homogene Verteilung in der zu redispergierenden Matrix zu erreichen. Dabei wird die Partikelgrösse der wässrigen Dispersion vor der Trocknung wieder erreicht. Beschrieben wird auch die Verwendung eines in Wasser redispergierbaren Pulvers in hydraulisch abbindenden Systemen zur Reduktion von Ausblühungen in hydraulisch abgebundenen Systemen, wobei das Pulver erhältlich ist nach dem Verfahren gemäß mindestens einem der Ansprüche 1 bis 9. Zudem kann 0 bis etwa 1000 Gewichtsteile, bezogen auf ein Gewichtsteil der Summe der organischen Komponente und des wasserlöslichen organischen polymeren Schutzkolloids, mindestens ein in Wasser redispergierbares filmbildendes Dispersionspulver auf Basis einer filmbildenden Dispersion und/ oder weitere Additive enthalten sein.

Das erfindungsgemässe in Wasser redispergierbare Pulver wird bevorzugt in hydraulisch abbindenden Massen, insbesondere in Betonen und Trockenmörteln eingesetzt. Solche Trockenmörtelformulierungen enthalten neben dem erfindungsgemässen Pulver insbesondere mindestens ein hydraulisch abbindendes Bindemittel sowie typischerweise weitere Mörtel-Formulierungsadditive, wie beispielsweise Füllstoffe wie Sand, Silikate und/ oder Carbonate, organische Bindemittel wie in Wasser redispergierbare filmbildende Dispersionspulver auf Basis von Emulsionspolymerisaten und/ oder Polyvinylalkohol, Rheologie-Steuerungsadditive wie Polysaccharidether, Casein, Verflüssiger und/ oder Verdicker, und/ oder Hydratationssteuerungsadditive wie Beschleuniger und/ oder Verzögerer. Das hydraulisch abbindende Bindemittel ist Portlandzement, z.B. nach EN 196 CEM I, II, III, IV und V, Calciumsulfat in Form von α- und/ oder β-Halbhydrat und/ oder Anhydrit, Tonerdeschmelzzement und/ oder Kalk, meist in der Form von Calciumhydroxid und/oder Calciumoxid. Bevorzugt werden Portlandzement, Tonerdeschmelzzement und/ oder Calciumsulfat. Dabei liegt der Anteil des erfindungsgemässen Pulvers bei 0.01 bis 25 Gew.-%, insbesondere etwa 0.1 bis 10 Gew.-%, und bevorzugt bei etwa 0.2 bis 5 Gew.-%, bezogen auf das hydraulisch abbindende Bindemittel. Wird die nicht getrocknete wässrige Dispersion verwendet, kann sie entweder alleine und/ oder zusammen mit flüssigen Polymerdispersionen und/ oder anderen flüssigen Additiven entweder zusammen mit dem Anmachwasser oder separat der hydraulisch abbindenden Formulierung zugegeben werden.

Die Trockenmörtel, welche das erfindungsgemässe Pulver enthalten, werden bevorzugt dort eingesetzt, wo die applizierten und ausgetrockneten Mörtel in mehr oder weniger regelmässigen Kontakt mit Wasser kommen können. Neben typischen Anwendungen im Aussenbereich, wie beispielsweise Vollwärmeschutzmörtel, Dichtungsschlämmen, Gips- und/ oder Kalk- und/ oder Zement-Putzen, Spritz- und/ oder Reparaturmörtel, Spritz- und/ oder Reparaturbetone sowie Polymer-Zement Betone (PCC) und/ oder Polymer-Zement Sprüh-Betone (S-PCC), sind dies Fugenkleber, Plywood-Mörtel, Mörtel für Haftbrücken, zementäre Parkettklebstoffe, Zementgrundierungen, Fliesenkleber, Nivellier- und/ oder Spachtelmassen. Zudem können die erfindungsgemässen Pulver und die nicht getrockneten wässrigen Dispersionen als Betonadditiv und/ oder als Additiv für einen Betonanstrich eingesetzt werden.

Dabei ist es von grossem Vorteil, dass sich das erfindungsgemässe Pulver in den hydraulisch abbindenden Systemen und den eingesetzten Mengen, neben der starken Reduktion von Ausblühungen, Rheologieneutral verhält, insbesondere wenn synthetische Stabilisierungssysteme eingesetzt werden. Zudem wird das Abbindeverhalten des hydraulisch abbindenden Systems nicht oder nur unwesentlich beeinflusst. Von grosser Bedeutung ist auch das gute Einrührverhalten, die gute Benetzbarkeit und die leichte Verarbeitbarkeit des Mörtels und Beton. Zudem verbessert sich zudem in vielen Fällen auch die Hydrophobie, was in der Regel ein willkommener Zusatzeffekt ist.

Zudem ist es auch möglich, das erfindungsgemässe Pulver in Klebstoffen einzusetzen. Dabei ist es besonders vorteilhaft, das Pulver in Pulverklebstoffen einzusetzen, insbesondere wo schon während der frühen Trocknungsphase eine erhöhte Kohäsion gewünscht wird.

Die Erfindung wird anhand der nachfolgenden Beispiele erläutert.

### A) Herstellung von wässrigen Dispersionen und von in Wasser redispergierbaren Pulvern

### Beispiel 1: Herstellung von Pulver 1

Es wurden 100g einer 20%igen Polyvinylalkohollösung mit einem Verseifungsgrad von 88 Mol-% und einer Höpplerviskosität als 4%-ige Lösung von 4 mPas in einem 500 ml Glasgefäss mit einem Propellerrührer unter Rühren bei 1000 Upm auf 85°C erhitzt. Anschliessend wurden 20g festes Kolophonium (Fluka) langsam zugegeben, wobei das Kolophonium vollständig dispergiert wurde. Es resultierte eine stabile, leicht gelbliche Dispersion mit einem Feststoffanteil von 33 Gew.%, einer Brookfieldviskosität bei 23°C von 10.000 mPas bei 20 Upm und einer mittleren Partikelgrösse der dispergierten Teilchen von 9 µm, welche durch Veränderung der Verfahrensparameter einfach verändert werden kann. Die erhaltene Dispersion wurde ohne weitere Additive mittels konventioneller Sprühtrocknung bei einer Eingangstemperatur von 125°C zu einem gelblichen, freifliessenden, in Wasser redispergierenden Pulver getrocknet, wobei keine nennenswerte Verschmutzung im Sprühturm festzustellen war und die Ausbeute im normalen Bereich lag.

### Beispiel 2: Herstellung von Pulver 2

Beispiel 1 wurde wiederholt, wobei jedoch 46.7g festes Kolophonium zugegeben wurden. Es resultierte eine stabile, leicht gelbliche Dispersion mit einem Feststoffanteil von 45 Gew.-%, einer Brookfieldviskosität bei 23°C von 1.000 mPas bei 20 Upm und einer mittleren Partikelgrösse von 8 µm, welche durch Veränderung der Verfahrensparameter einfach verändert werden kann. Nach Sprühtrocknung resultierte ein gelbliches, freifliessendes, in Wasser redispergierendes Pulver, wobei keine nennenswerte Verschmutzung im Sprühturm festzustellen war und die Ausbeute im normalen Bereich lag.

### Beispiel 3: Herstellung von Pulver 3

25.0g festes Kolophonium wurden bei Raumtemperatur in 25.0g eines flüssigen Alkyltriethoxysilans unter leichtem Rühren in einem 100ml Gefäss gelöst. Es resultierte eine stabile, niederviskose gelbliche Lösung. Die Lösung wurde bei Raumtemperatur unter Rühren langsam zu 375g einer 20%igen Polyvinylalkohollösung mit einem Verseifungsgrad von 88 Mol-% und einer Höpplerviskosität als 4%-ige Lösung von 4 mPas in einem 800 ml Glasgefäss gegeben. Es resultierte eine leicht gelbliche Dispersion mit einem Feststoffanteil von 29 Gew.-% welche mit 0.1 N Natronlauge auf pH 7 eingestellt und anschliessend gemäss Bsp. 1 sprühgetrocknet wurde. Es resultierte ein gelbliches, freifliessendes, in Wasser redispergierendes Pulver, wobei keine nennenswerte Verschmutzung im Sprühturm festzustellen war und die Ausbeute im normalen Bereich lag.

### Beispiel 4: Herstellung von Pulver 4

28g der nach Bsp. 1 hergestellten Dispersion wurden zu 73g einer EVA-Dispersion mit einem Feststoffgehalt von 51 Gew.-% und einer Glasübergangstemperature T_{g} von -3°C gegeben und anschliessend gemäss Bsp. 1 sprühgetrocknet. Es resultierte ein gelbliches, freifliessendes, in Wasser redispergierendes Pulver, wobei keine nennenswerte Verschmutzung im Sprühturm festzustellen war und die Ausbeute im normalen Bereich lag.

### Vergleichsbeispiel 5: Herstellung von Pulver 5

Beispiel 1 wurde wiederholt, wobei jedoch 20g feste Stearinsäure (Fluka) anstelle von Kolophonium der Polyvinylalkohollösung zugegeben wurden. Es resultierte eine weisse Dispersion mit einem Feststoffanteil von 33 Gew-%, welche anschliessend analog Beispiel 1 zu einem weissen, freifliessenden, in Wasser redispergierenden Pulver getrocknet wurde.

### Vergleichsbeispiel 6: Herstellung von Pulver 6

Beispiel 1 wurde wiederholt, wobei jedoch 20g Carnaubawachs (Merck; bestehend aus ca. 85% Wachsestern) anstelle von Kolophonium der Polyvinylalkohollösung zugegeben wurden. Es resultierte eine leicht gelbliche Dispersion mit einem Feststoffanteil von 33 Gew.-%, welche anschliessend analog Bsp. 1 zu einem leicht gelblichen, freifliessenden, in Wasser redispergierenden Pulver getrocknet wurde.

### Beispiel 7: Herstellung von Pulver 7

30g festes Polyvinylpyrrolidon (PVP-K90; Fluka) und 90g Wasser wurden in einem 500 ml Glasgefäss mit einem Propellerrührer unter Rühren bei 1000 Upm auf 85°C erhitzt. Nachdem das Polyvinylpyrrolidon gelöst war, wurden 30g festes Kolophonium (Fluka) langsam zugegeben, wobei das Kolophonium vollständig dispergiert wurde. Es resultierte eine stabile, leicht gelbliche Dispersion mit einem Feststoffanteil von 40 Gew.-%, einer Brookfieldviskosität bei 23°C von 10.000 mPas bei 20 Upm und einer mittleren Partikelgrösse von 3.7 µm, welche durch Veränderung der Verfahrensparameter einfach verändert werden kann. Die erhaltene Dispersion wurde ohne weitere Additive mittels konventioneller Sprühtrocknung bei einer Eingangstemperatur von 125°C zu einem gelblichen, freifliessenden, in Wasser redispergierenden Pulver getrocknet, wobei keine nennenswerte Verschmutzung im Sprühturm festzustellen war und die Ausbeute im normalen Bereich lag.

### Beispiel 8: Herstellung von Pulver 8

200g einer kommerziell erhältlichen, mittels anionischen Emulgatoren stabilisierten wässrigen Dispersion auf Basis eines modifizierten Kolophoniums und einem Feststoffanteil von 30 Gew.-% wurden unter Rühren mit 24g einer 25%igen Polyvinylalkohollösung mit einem Verseifungsgrad von 88 Mol-% und einer Höpplerviskosität als 4%-ige Lösung von 4 mPas versetzt. Es resultiert eine stabile, leicht gelbliche Dispersion mit einem Festkörper von 29.5 Gew.-%. Die erhaltene Dispersion wurde ohne weitere Additive mittels konventioneller Sprühtrocknung bei einer Eingangstemperatur von 125°C zu einem gelblichen, freifliessenden, in Wasser redispergierenden Pulver getrocknet, wobei keine nennenswerte Verschmutzung im Sprühturm festzustellen war und die Ausbeute im normalen Bereich lag.

### Beispiel 9: Herstellung von Pulver 9

150g einer mit Polyvinylalkohol stabilisierten wässrigen Dispersion auf Basis Vinylacetat/ Vinylversatat mit einem Feststoffanteil von 40.5 Gew.-% wurden mit 30g einer kommerziell erhältlichen, mittels amphoteren Emulgatoren stabilisierten wässrigen Dispersion auf Basis eines modifizierten Kolophoniums und einem Feststoffanteil von 30 Gew.-% und 30g einer 25%-igen Polyvinylalkohollösung mit einem Verseifungsgrad von 88 Mol-% und einer Höpplerviskosität als 4%-ige Lösung von 4 mPas versetzt. Der so erhaltenen Dispersion wurden noch 1.5g eines Entschäumers zugesetzt. Anschliessend wurde mit Wasser auf einen Festkörper von 25 Gew.-% verdünnt. Die so erhaltene Dispersion wurde mittels konventioneller Sprühtrocknung bei einer Eingangstemperatur von 125°C zu einem leicht gelblichen, freifliessenden, in Wasser redispergierenden Pulver getrocknet, wobei keine nennenswerte Verschmutzung im Sprühturm festzustellen war und die Ausbeute im normalen Bereich lag.

### Beispiel 10: Herstellung von Dispersion 1 (nicht erfindungsgemäß)

10g Abietinsäure (Fluka) wurden in 20g Terpentinöl (Fluka) gelöst. Es entstand eine leicht viskose und leicht trübe Lösung. Die Lösung wurde unter Rühren bei Raumtemperatur langsam zu 150g einer 20%-igen Polyvinylalkohollösung mit einem Verseifungsgrad von 88 Mol-% und einer Höpplerviskosität als 4%-ige Lösung von 4 mPas gegeben. Es resultierte eine stabile, weissliche Dispersion mit einem Festkörper von 33 Gew.-%. Die erhaltene Dispersion wurde direkt in der Mörtelmischung eingesetzt.

### Vergleichsbeispiel 11: Herstellung von Dispersion 2

10g Naphthylessigsäure (Fluka) wurden in 10g Aceton gelöst. Die Lösung wurde unter Rühren bei Raumtemperatur langsam zu 50g einer 20%-igen Polyvinylalkohollösung mit einem Verseifungsgrad von 88 Mol-% und einer Höpplerviskosität als 4%-ige Lösung von 4 mPas gegeben. Es resultierte eine stabile, weissliche Dispersion mit einem Festkörper von 43 Gew.-%. Die erhaltene Dispersion wurde direkt in der Mörtelmischung eingesetzt.

### B) Anwendungstechnische Prüfungen mit verschiedenen zementären Massen.

### Anwendungsbeispiel 1:

Es wurden 35.0 Teile weisser Portlandzement, 19.2 Teile Quarzsand (0.08-0.2mm), 41.0 Teile Calciumcarbonat Durcal 65, 0.3 Teile eines Celluloseethers (Viskosität als 2% wässrige Lösung: 3200 mPas), 2.0 Teile Pigment Bayferrox 110 und 1.0 Teile Baukalk gut gemischt und als Trockenmörtel Grundrezeptur verwendet. Zu dieser wurden verschiedene Pulver in unterschiedlichen Mengen eingesetzt, wie aus Tabelle 1 hervorgeht, welche ohne weitere spezielle Mischvorgänge einfach in die Mörtelmatrix eingerührt werden konnten. Die Rezepturen wurden jeweils mit 32 Teilen Wasser, bezogen auf 100 Teile Trockenformulierung, mit einem 60mm Propellerrührer mit einer Geschwindigkeit von 950 Upm während 60 Sekunden angerührt, wobei die angegebene Menge Anmachwasser unter Rühren zugegeben wurde. Nach einer Reifezeit von 3 Minuten wurde der Mörtel von Hand nochmals kurz aufgerührt, und mit einem Kammspachtel auf eine unglasierte Steingutfliese mit einer Dicke von 6 mm auf einer Grösse von (196mm x 50mm) appliziert, wobei Fliesen unmittelbar vorher mit Wasser gesättigt wurden. Es wurden jeweils zwei verschiedene Proben hergestellt, wobei der Mörtel mittels Distanzschienen in einer Schichtdicke von 2.2 mm (respektive 1.0 mm) appliziert wurde.

Die Prüflinge wurden anschliessend sofort in einen auf 7°C gekühlten Klimaraum an einen Behälter mit Wasser montiert, welches konstant auf 20°C erwärmt wurde. Der Behälter wurde so konstruiert, dass Prüflinge mindestens 5 cm über der Wasseroberfläche zu liegen kommen und eine Neigung von einem 45° Winkel besitzen. Die von den Prüflingen nicht bedeckte Fläche wurde abgedeckt und isoliert, so dass Wasserdampf durch das Trägermaterial in und durch die Prüflinge dringt. Nach einer Lagerdauer von 7 Tagen wurde die Oberfläche auf Ausblühungen hin optisch (Auge und Mikroskop) beurteilt.

**Tabelle 1: Anwendungstechnische Beispiele anhand einer eingefärbten zementären Spachtelmasse mit einer Schichtdicke von 2.2 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver/ Disp.^{a)} | Nr. | Einsatzmenge ^{b)} [Gew.-%] | Ausblühung |
|---|---|---|---|---|---|
| B-1 (Ref) | 100 | N/A | N/A | 0 | Sehr stark |
| B-2 | 99.8 | P | 1 | 0.2 | keine |
| B-3 | 99.6 | P | 3 | 0.4 | keine |
| B-4 | 98.0 | P | 4 | 2.0 | keine |
| B-36 | 99.6 | P | 7 | 0.4 | keine |
| B-37 | 99.8 | P | 7 | 0.2 | keine |
| B-38 | 99.6 | P | 8 | 0.4 | keine |
| B-39 | 99.8 | P | 8 | 0.2 | keine |
| B-40 | 99.8 | D | 1 | 0.2 | keine |
| B-41 | 99.9 | D | 1 | 0.1 | keine |
| B-42 | 98.0 | P | 9 | 2.0 | keine |
| B-5 (Vgl) | 99.8 | P | 5 | 0.2 | Sehr stark |
| B-6 (Vgl) | 99.6 | P | 5 | 0.4 | Sehr stark |
| B-7 (Vgl) | 99.8 | P | 6 | 0.2 | Sehr stark |
| B-8 (Vgl) | 99.6 | P | SEAL80 ^{c)} | 0.4 | stark |
| B-9 (Vgl) | 99.8 | P | SEAL80 ^{c)} | 0.2 | stark |

| | | | | | |
|---|---|---|---|---|---|
| a) "P" steht für Pulver, "D" für Dispersion (nicht erfindungsgemäß). b) Bei Pulvern bezieht sich die Einsatzmenge auf die eingesetzte Pulvermenge, bei Dispersionen auf den Feststoffgehalt der Dispersion. c) Elotex Seal80 ist ein redispergierbares Hydrophobierungsmittel auf Basis eines Spezialsilans und Polyvinylalkohol. | | | | | |

Die Resultate zeigen deutlich, dass alle Kolophonium enthaltenden Proben die Ausblühungen so stark unterdrücken oder sogar ganz unterbinden, dass selbst unter dem Mikroskop keine beobachtet wurden. Die Referenzproben hingegen zeigen sehr starke Ausblühungen.

### Anwendungsbeispiel 2:

Proben, welche analog derjenigen von Anwendungsbeispiel 1 hergestellt wurden, wurden 7 Tage bei 23°C und 50% relativer Feuchtigkeit gelagert. Anschliessend wurde zur Beurteilung der Hydrophobie die Zeit bestimmt, bis 5 Tropfen Wasser (ca. 0.2g) auf der Oberfläche verschwunden waren.

**Tabelle 2: Anwendungstechnische Beispiele anhand einer eingefärbten zementären Spachtelmasse mit einer Schichtdicke von 2.2 mm zur Beurteilung der Hydrophobie.**

| Versuch Nr. | Grundrezeptur Anteil [Gew.-%] | Pulver/ Disp.^{a)} | Nr. | Einsatzmenge ^{b)} [Gew.-%] | Zeit [min] |
|---|---|---|---|---|---|
| H-1 (Ref) | 100 | P | N/A | 0 | sofort |
| H-2 | 99.6 | P | 2 | 0.4 | 240 |
| H-3 | 99.8 | P | 2 | 0.2 | 20 |
| H-4 (Vgl) | 99.6 | P | 5 | 0.4 | sofort |
| H-5 (Vgl) | 99.8 | P | SEAL80 ^{c)} | 0.2 | 150 |
| H-6 (Vgl) | 99.6 | P | SEAL80 ^{c)} | 0.4 | 370 |

| | | | | | |
|---|---|---|---|---|---|
| a), b), c): siehe Tabelle 1 | | | | | |

Die Daten in der Tabelle 2 zeigen die sehr guten Hydrophobierungseigenschaften von Elotex Seal80, welches jedoch keine oder nur eine geringe Reduktion der Ausblühungen ergibt (siehe andere Beispiele). Die erfinderischen Pulver hingegen zeigen neben einer starken Reduktion der Ausblühungen überraschenderweise mit zunehmendem Anteil auch eine gute Mörtelhydrophobie. Das Pulver 5, enthaltend die als Hydrophobierungsmittel bekannte Stearinsäure, weisst jedoch weder eine Hydrophobie noch eine Reduktion der Ausblühungen auf.

### Anwendungsbeispiel 3:

Das Anwendungsbeispiel 1 wurde wiederholt, wobei die Schichtdicke auf 1.0 mm eingestellt wurde.

**Tabelle 3: Anwendungstechnische Beispiele anhand einer eingefärbten zementären Spachtelmasse mit einer Schichtdicke von 1.0 mm zur Beurteilung von Ausblühungen.**

| Versuch Nr. | Grundrezeptur Anteil [Gew.-%] | Pulver/ Disp.^{a)} | Nr. | Einsatzmenge ^{b)} [Gew.-%] | Ausblühung |
|---|---|---|---|---|---|
| B-10 (Ref) | 100 | P | N/A | 0 | stark |
| B-11 | 99.8 | P | 1 | 0.2 | keine |
| B-12 | 99.6 | P | 3 | 0.4 | keine |
| B-13 | 98.0 | P | 4 | 2.0 | keine |
| B-43 | 99.6 | P | 7 | 0.4 | keine |
| B-44 | 99.8 | P | 7 | 0.2 | keine |
| B-45 | 99.8 | D | 1 | 0.2 | keine |
| B-46 | 99.9 | D | 1 | 0.1 | keine |
| B-47 | 99.6 | P | 8 | 0.4 | keine |
| B-48 | 99.8 | P | 8 | 0.2 | keine |
| B-49 | 98.0 | P | 9 | 2.0 | keine |
| B-14 (Vgl) | 99.8 | P | 5 | 0.2 | stark |
| B-15 (Vgl) | 99.6 | P | 5 | 0.4 | stark |
| B-16 (Vgl) | 99.8 | P | 6 | 0.2 | stark |
| B-17 (Vgl) | 99.6 | P | SEAL80 ^{c)} | 0.4 | wenig |
| B-18 (Vgl) | 99.8 | P | SEAL80 ^{c)} | 0.2 | stark |

| | | | | | |
|---|---|---|---|---|---|
| a), b), c): siehe Tabelle 1 | | | | | |

Die Resultate zeigen eine klare Reduktion der Ausblühungen auch in dünn aufgetragenen Mörteln, sofern ein erfinderisches Pulver oder eine erfinderische Dispersion eingesetzt wird. Pulver 4 in Versuch Nr. B-13 verdeutlicht auch, dass das erfinderische Pulver auch beispielsweise zu in Wasser redispergierbaren filmbildenden Dispersionspulvern auf Basis von Emulsionspolymerisaten gegeben und als solche Mischung eingesetzt werden kann.

### Anwendungsbeispiel 4:

Es wurden 28.0 Teile weisser Portlandzement, 25.0 Teile Quarzsand 0.1-0.3mm, 8.0 Teile Sand 0.7-1.2mm, 35.0 Teile Sand 1.5-2.2mm, 0.05 Teile eines Celluloseethers (Viskosität als 2% wässrige Lösung: 15'000 mPas) und 2.0 Teile Pigment Bayferrox 110 gut gemischt und als Trockenmörtelgrundrezeptur verwendet. Die Rezepturen wurden jeweils mit 18 Teilen Wasser, bezogen auf 100 Teile Trockenformulierung, angerührt und analog Anwendungsbeispiel 1 getestet.

**Tabelle 4: Anwendungstechnische Beispiele anhand eines dekorativen Farbputzes mit einer Schichtdicke von 2.2 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver/ Disp.^{a)} | Nr. | Einsatzmenge ^{b)} [Gew.-%] | Ausblühung |
|---|---|---|---|---|---|
| B-19 (Ref) | 100 | P | N/A | 0 | Sehr stark |
| B-20 | 99.8 | P | 1 | 0.2 | keine |
| B-21 | 99.8 | P | 3 | 0.2 | keine |
| B-22 | 98.0 | P | 4 | 2.0 | keine |
| B-50 | 99.6 | P | 7 | 0.4 | keine |
| B-51 | 99.8 | P | 7 | 0.2 | keine |
| B-52 | 99.8 | D | 1 | 0.2 | keine |
| B-53 | 99.9 | D | 1 | 0.1 | keine |
| B-54 (Vgl.) | 99 | D | 2 | 1 | Sehr stark |
| B-55 (Vgl.) | 99.5 | D | 2 | 0.5 | Sehr stark |
| B-56 | 99.6 | P | 8 | 0.4 | keine |
| B-57 | 99.8 | P | 8 | 0.2 | keine |
| B-58 | 98.0 | P | 9 | 2.0 | keine |
| B-23 (Vgl.) | 99.8 | P | 5 | 0.2 | Sehr stark |
| B-24 (Vgl.) | 99.6 | P | 5 | 0.4 | Sehr stark |
| B-25 (Vgl.) | 99.8 | P | 6 | 0.2 | Sehr stark |
| B-26 (Vgl.) | 99.6 | P | SEAL80 ^{c)} | 0.4 | stark |

| | | | | | |
|---|---|---|---|---|---|
| a), b), c): siehe Tabelle 1 | | | | | |

Die aufgeführten Resultate demonstrieren, dass die starke Reduktion der Ausblühungen auch in einem dekorativen Farbputz zustande kommt.

### Anwendungsbeispiel 5:

Es wurden 40.0 Teile weisser Portlandzement, 3 Teile Aluminatzement, 50.0 Teile Quarzsand 0.1-0.3mm, 2 Teile eines hydrophoben, in Wasser redispergierbaren filmbildenden Dispersionspulvers auf Basis eines Emulsionspolymerisates (Elotex WS45), 1 Teil Cellulosefaser, 0.10 Teile Weinsäure und 2.0 Teile Pigment Bayferrox 110 und 1.0 Teile Baukalk gut gemischt und als Trockenmörtel Grundrezeptur verwendet. Die Rezepturen wurden jeweils mit 22 Teilen Wasser, bezogen auf 100 Teile Trockenformulierung, angerührt und analog Anwendungsbeispiel 1 getestet.

**Tabelle 5: Anwendungstechnische Beispiele anhand eines Fugenmörtels mit einer Schichtdicke von 2.0 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver/ Disp.^{a)} | Nr. | Einsatzmenge ^{b)} [Gew.-%] | Ausblühung |
|---|---|---|---|---|---|
| B-27 Ref) | 100 | P | N/A | 0 | stark |
| B-28 | 99.6 | P | 2 | 0.4 | keine |
| B-29 | 99.8 | P | 2 | 0.2 | keine |
| B-30 | 99.6 | P | 3 | 0.4 | keine |
| B-31 (Vgl) | 99.6 | P | SEAL80 ^{c)} | 0.4 | stark |

| | | | | | |
|---|---|---|---|---|---|
| a), b), c): siehe Tabelle 1 | | | | | |

Die aufgeführten Resultate demonstrieren, dass die starke Reduktion der Ausblühungen auch in einem Fugenmörtel zustande kommt.

### Anwendungsbeispiel 6:

Es wurden 32.0 Teile weisser Portlandzement, 1 Teil Aluminatzement, 65.0 Teile Quarzsand (0-0.2mm), 0.35 Teile Calciumsulfat, 0.75 Teile eines hydrophoben, in Wasser redispergierbaren filmbildenden Dispersionspulvers auf Basis eines Emulsionspolymerisates (Elotex HD1501), 0.25 Teile eines Verflüssigers auf Basis Melaminsulfonat, 0.1 Teil eines pulverförmigen Entschäumers, 0.5 Teile schwarzes Eisenoxid und 0.05 Teile eines Celluloseethers (Viskosität als 2% wässrige Lösung: 4000mPas) gut gemischt und als Trockenmörtel Grundrezeptur verwendet. Die Rezepturen wurden jeweils mit 17.5 Teilen Wasser, bezogen auf 100 Teile Trockenformulierung, angerührt und analog Anwendungsbeispiel 1 getestet.

**Tabelle 6: Anwendungstechnische Beispiele anhand eines Fugenmörtels mit einer Schichtdicke von 2.0 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver/ Disp.^{a)} | Nr. | Einsatzmenge ^{b)} [Gew.-%] | Ausblühung |
|---|---|---|---|---|---|
| B-32 Ref) | 100 | P | N/A | 0 | Sehr stark |
| B-33 | 99.8 | P | 2 | 0.2 | keine |
| B-34 | 99.6 | P | 3 | 0.4 | keine |
| B-35 (Vgl) | 99.6 | P | SEAL80 ^{c)} | 0.4 | stark |

| | | | | | |
|---|---|---|---|---|---|
| a), b), c): siehe Tabelle 1 | | | | | |

Die aufgeführten Resultate demonstrieren, dass die starke Reduktion oder sogar das totale Verhindern der Ausblühungen nicht nur in verschiedenen Fugenmörteln auftritt, sondern in den verschiedensten Mörteln zustande kommt. Dazu wird erstaunlicherweise nur ein sehr geringer Anteil an diesem Additiv eingesetzt, was sich nicht oder nur sehr unwesentlich auf die anderen Mörteleigenschaften auswirkt - sei es im Frischmörtel oder im abgebundenen Zustand.

Obwohl das verwendete Kolophonium als Gefahrstoff klassifiziert ist, wird durch die Verkapselung des Kolophoniums mit Polyvinylalkohl das Gefahrenpotential erniedrigt. Zudem bereitet die Handhabung in der Regel wesentlich weniger Probleme, da das Pulver frei fliessend ist und somit das Fördern, Dosieren und das Vermischen ohne grossen Arbeitsaufwand durchgeführt und oft auch automatisiert werden kann.

## Patentansprüche

1. Verfahren zur Herstellung von in Wasser redispergierbaren Pulvern auf Basis einer organischen Komponente und eines wasserlöslichen organischen polymeren Schutzkolloids, **dadurch gekennzeichnet, dass**
a) die organische Komponente eine Verbindung mit einer cyclischen Gruppe ist , wobei die Verbindung ganz oder teilweise gesättigt ist und einen Schmelzpunkt von etwa -20 bis 250 °C sowie ein Molekulargewicht von etwa 100 bis 10'000 besitzt, und wobei die organische Komponente ein Terpenoid, eine Harzsäure, Kolophonium, Terpenharz, Terpen-Phenol-Harz und/ oder deren Derivat ist, und
b) mit dem wasserlöslichen organischen polymeren Schutzkolloid in Wasser eine stabile Dispersion bildet, wobei das wasserlösliche organische polymere Schutzkolloid einen Gehalt an Mono- und Dicarbonsäuren sowie deren Anhydriden von weniger als 50 Mol-% besitzt, und nicht aus aromatischen Sulfonsäurekondensaten besteht, und wobei
c) das Gewichtsverhältnis der organischen Komponente zum wasserlöslichen organischen polymeren Schutzkolloid etwa von 95 : 5 bis 5 : 95 beträgt, und
d) die organische Komponente in einem ersten Schritt mit dem wasserlöslichen organischen polymeren Schutzkolloid in Wasser dispergiert und stabilisiert wird und die erhaltene wässrige Dispersion anschliessend mittels Sprühtrocknung, Gefriertrocknung, Fliessbetttrocknung und/ oder Schnelltrocknung getrocknet wird.

2. Verfahren nach Anspruch 1, **dadurch gekennzeichnet, dass** die cyclische Gruppe der organischen Komponente eine mono-, di-, tri-, tetra- und/ oder pentacyclische Gruppe ist.

3. Verfahren nach mindestens einem der Ansprüche 1 oder 2, **dadurch gekennzeichnet, dass** die organische Komponente ein Naturprodukt ist, insbesondere ein Monoterpen, Sesquiterpen, Diterpen, Sesterterpen, Triterpen, Tetraterpen, Polyterpen und/ oder deren Derivate ist.

4. Verfahren nach mindestens einem der Ansprüche 1 bis 3, **dadurch gekennzeichnet, dass** die organische Komponente mindestens eine Verbindung mit mindestens einer Carboxyl-, Carbonyl-, Aldehyd- und/ oder Alkoholgruppe ist.

5. Verfahren nach mindestens einem der Ansprüche 1 bis 4, **dadurch gekennzeichnet, dass** die organische Komponente Abietinsäure, Sylvinsäure, Neoabietinsäure, Lävopinarsäure, Pimarsäure, Isopimarsäure, und/ oder Palustrinsäure und/ oder deren Derivate ist.

6. Verfahren nach mindestens einem der Ansprüche 1 bis 5, **dadurch gekennzeichnet, dass** die organische Komponente im sauren bis neutralen Wasser nicht oder nur schwer löslich ist.

7. Verfahren nach mindestens einem der Ansprüche 1 bis 6, **dadurch gekennzeichnet, dass** die organische Komponente in verdünnter Natronlauge teilweise oder ganz löslich ist.

8. Verfahren nach den Ansprüchen 1 bis 7, **dadurch gekennzeichnet, dass** vor, während oder nach dem Dispergieren weitere flüssige und/ oder wasserlösliche Additive und während oder nach der Trocknung weitere pulverförmige Additive zugegeben werden.

9. Verfahren nach mindestens einem der Ansprüche 1 bis 8, **dadurch gekennzeichnet, dass** das redispergierbare Pulver nach der Trocknung mit in Wasser redispergierbaren filmbildenden Dispersionspulvern, pulverförmigen redispergierbaren Hydrophobierungsmittel, insbesondere auf Basis von Silanen, Siloxanen, Silikonen, Fettsäuren und/ oder Fettsäureestern, und/ oder pulverförmigen Polysaccharidethern vermischt wird.

10. Verfahren nach mindestens einem der Ansprüche 1 bis 9, **dadurch gekennzeichnet, dass** die erhaltene wässrige Dispersion gemeinsam mit mindestens einer anderen Dispersion, insbesondere auf Basis von filmbildenden Polymeren und/ oder Silanen, Silanestern, Siloxanen, Silikonen, Fettsäuren und/ oder Fettsäureestern getrocknet wird, wobei die jeweiligen Dispersionen vor der Trocknung miteinander vermischt werden oder getrennt versprüht und anschliessend gemeinsam getrocknet werden.

11. Verfahren nach Anspruch 10, **dadurch gekennzeichnet, dass** die wässrige Dispersion mittels Emulgatoren stabilisiert ist und die mindestens eine andere Dispersion einen Überschuss an wasserlöslichem organischen polymeren Schutzkolloid in Wasser enthält oder ein solcher zugegeben wird, wobei das wasserlösliche organische polymere Schutzkolloid einen Gehalt an Mono- und Dicarbonsäuren sowie deren Anhydriden von weniger als 50 Mol-% besitzt und nicht aus aromatischen Sulfonsäurekondensaten besteht.

12. In Wasser redispergierbares Pulver erhältlich nach dem Verfahren gemäss mindestens einem der Ansprüche 1 bis 9.

13. Trockenmörtelformulierung umfassend das Pulver nach Anspruch 12, mindestens ein hydraulisch abbindendes Bindemittel und Mörtelformulierungsadditive ausgewählt aus der Gruppe der Füllstoffe, organische Bindemittel, Rheologie-Steuerungsadditive und Hydratationssteuerungsadditive.

14. Trockenmörtelformulierung nach Anspruch 13, wobei das Pulver nach Anspruch 12 in einer Menge von 0.01 bis 25 Gew.%, bezogen auf das hydraulisch abbindende Bindemittel eingesetzt wird.

15. Verwendung der Trockenmörtelformulierung nach Anspruch 13 oder 14 als Vollwärmeschutzmörtel, Dichtungsschlämme, Gips- und/oder Kalk- und/oder Zement-Putz, Spritz- und/oder Reparaturmörtel, Spritz- und/oder Reparaturbeton, Polymer-Zement Beton (PCC), Polymer-Zement Sprüh-Beton (S-PCC), Fugenkleber, Plywood-Mörtel, Mörtel für Haftbrücken, zementärer Parkettklebstoff, Zementgrundierung, Fliesenkleber, Nivellier- und/oder Spachtelmasse.

## Claims

1. Process for the preparation of water-redispersible powders on the basis of an organic component and a water-soluble organic polymeric protective colloid, **characterised in that**
a) the organic component is a compound with a cyclic group, wherein the compound is wholly or partially saturated and has a melting point of about -20 to 250°C and a molecular weight of about 100 to 10,000, and wherein the organic component is a terpenoid, a colophonic acid, colophonium, colophony, terpene-phenol resin and/or the derivative thereof and
b) forms a stable dispersion with the water-soluble organic polymeric protective colloid in water, wherein the water-soluble organic polymeric protective colloid has a content of mono- and dicarboxylic acids and the anhydrides thereof of less than 50 mol%, and is not made up of aromatic sulfonic acid condensates, and wherein
c) the weight ratio of organic component to water-soluble organic polymeric protective colloid is about 95 : 5 to 5 : 95, and
d) in a first step the organic component is dispersed in water with the water-soluble organic polymeric protective colloid and stabilised and the obtained aqueous dispersion is subsequently dried by means of spray-drying, freeze-drying, fluid bed drying and/or high-speed drying.

2. Process according to claim 1, **characterised in that** the cyclic group of the organic component is a mono-, di-, tri-, tetra- and/or pentacyclic group.

3. Process according to at least one of claims 1 or 2, **characterised in that** the organic component is a natural product, more particularly a monoterpene, sesquiterpene, diterpene, sesterterpene, triterpene, tetraterpene, polyterpene and/or the derivatives thereof.

4. Process according to at least one of claims 1 to 3, **characterised in that** the organic component is at least one compound with at least one carboxyl, carbonyl, aldehyde and/or alcohol group.

5. Process according to at least one of claims 1 to 4, **characterised in that** the organic component is abietic acid, sylvinic acid, neoabietic acid, levopimaric acid, pimaric acid, isopimaric acid and/or palustric acid and/or the derivatives thereof.

6. Process according to at least one of claims 1 to 5, **characterised in that** the organic component is insoluble or only poorly soluble in acid to neutral water.

7. Process according to at least one of claims 1 to 6, **characterised in that** the organic component is partially or wholly soluble in diluted sodium hydroxide.

8. Process according to claims 1 to 7, **characterised in that** before, during or after the dispersing further liquid and/or water-soluble additives are added and during or after the drying further powdery additives are added.

9. Process according to at least one of claims 1 to 8, **characterised in that** after the drying the redispersible powder is mixed with water-redispersible film-forming dispersion powders, powdery redispersible hydrophobing agents, more particularly on the basis of silanes, siloxanes, silicones, fatty acids and/or fatty acid esters, and/or powdery polysaccharide ethers.

10. Process according to at least one of claims 1 to 9, **characterised in that** the obtained aqueous dispersion is dried jointly with at least one other dispersion, more particularly on the basis of film-forming polymers and/or silanes, silane esters, siloxanes, silicones, fatty acids and/or fatty acid esters, wherein the dispersions in question are mixed with one another before the drying or are sprayed separately and then dried jointly.

11. Process according to claim 10, **characterised in that** the aqueous dispersion is stabilised using emulsifiers and the at least one other dispersion contains an excess of water-soluble organic polymeric protective colloid in water or such is added, wherein the water-soluble organic polymeric protective colloid has a content of mono- and dicarboxylic acids and the anhydrides thereof of less than 50 mol% and is not made up of aromatic sulfonic acid condensates.

12. Water-redispersible powder obtainable according to the process according to at least one of claims 1 to 9.

13. Dry mortar formulation comprising the powder according to claim 12, at least one hydraulically setting binder and mortar formulation additive selected from the group of fillers, organic binders, rheology control additives and hydration control additives.

14. Dry mortar formulation according to claim 13, wherein the powder according to claim 12 is used in an amount from 0.01 to 25 wt.%, based on the hydraulically setting binder.

15. Use of the dry mortar formulation according to claim 13 or 14 as thermal insulation mortar, sealing slurry, gypsum and/or lime and/or cement plaster, spraying and/or repair mortar, spraying and/or repair concrete, polymer-cement concrete (PCC), polymer-cement spraying concrete (S-PCC), tile grout, plywood mortar, mortar for mineral bonding agents, cementitious parquet adhesives, cement primer, tile adhesive, levelling and/or trowelling compound.

## Revendications

1. Procédé servant à fabriquer des poudres redispersibles dans l'eau à base d'un composant organique et d'un colloïde protecteur polymère organique soluble dans l'eau, **caractérisé en ce que**
a) le composant organique est un composé comprenant un groupe cyclique, dans lequel le composé est totalement ou partiellement saturé et possède un point de fusion allant d'environ -20 à 250 °C ainsi qu'un poids moléculaire allant d'environ 100 à 10 000, et dans lequel le composant organique est un terpénoïde, un acide de résine, une colophane, une résine terpénique, une résine de terpène phénolique et/ou leur dérivé, et
b) forme dans l'eau avec le colloïde protecteur polymère organique soluble dans l'eau une dispersion stable, dans lequel le colloïde protecteur polymère organique soluble dans l'eau possède une teneur en acides monocarboxyliques ou dicarboxyliques ainsi qu'en leurs anhydrides inférieurs à 50 % en mol. et n'est pas constitué de condensats aromatiques d'acide sulfonique, et dans lequel
c) le rapport en poids du composant organique par rapport au colloïde protecteur organique soluble dans l'eau va d'environ 95:5 à 5:95, et
d) le composant organique est dispersé et stabilisé dans l'eau lors d'une première étape avec le colloïde protecteur polymère organique soluble dans l'eau et la dispersion aqueuse obtenue est séchée immédiatement après au moyen d'un séchage par pulvérisation, d'une lyophilisation, d'un séchage à lit fluidisé et/ou d'un séchage rapide.

2. Procédé selon la revendication 1, **caractérisé en ce que** le groupe cyclique du composant organique est un groupe monocyclique, dicyclique, tricyclique, tétracyclique et/ou pentacyclique.

3. Procédé selon au moins l'une quelconque des revendications 1 ou 2, **caractérisé en ce que** le composant organique est un produit naturel, en particulier est un monoterpène, un sesquiterpène, un diterpène, un sesterterpène, un triterpène, un tétraterpène, un polyterpène et/ou leurs dérivés.

4. Procédé selon au moins l'une quelconque des revendications 1 à 3, **caractérisé en ce que** le composant organique est au moins un composé comprenant au moins un groupe carboxyle, carbonyle, aldéhyde et/ou alcool.

5. Procédé selon au moins l'une quelconque des revendications 1 à 4, **caractérisé en ce que** le composant organique est un acide abiétique, un acide sylvinique, un acide néoabiétique, un acide lévopimarique, un acide pimarique, un acide isopimarique et/ou un acide palustrinique et/ou leurs dérivés.

6. Procédé selon au moins l'une quelconque des revendications 1 à 5, **caractérisé en ce que** le composant organique n'est pas soluble ou est seulement difficilement soluble dans l'eau acide à neutre.

7. Procédé selon au moins l'une quelconque des revendications 1 à 6, **caractérisé en ce que** le composant organique est partiellement ou totalement soluble dans de la soude caustique diluée.

8. Procédé selon les revendications 1 à 7, **caractérisé en ce que** d'autres additifs liquides et/ou solubles dans l'eau sont ajoutés avant, pendant ou après la dispersion et d'autres additifs pulvérulents sont ajoutés après le séchage.

9. Procédé selon au moins l'une quelconque des revendications 1 à 8, **caractérisé en ce que** la poudre redispersible est mélangée après le séchage à des poudres de dispersion filmogènes redispersibles dans l'eau, à des agents d'hydrophobisation redispersibles pulvérulents, en particulier à base de silanes, de siloxanes, de silicones, d'acides gras et/ou d'esters d'acide gras, et/ou à des éthers de polysaccharide pulvérulents.

10. Procédé selon au moins l'une quelconque des revendications 1 à 9, **caractérisé en ce que** la dispersion aqueuse obtenue est séchée conjointement avec au moins une autre dispersion, en particulier à base de polymères filmogènes et/ou de silanes, d'esters de silane, de siloxanes, de silicones, d'acides gras et/ou d'esters d'acide gras, dans lequel les dispersions respectives sont mélangées les unes aux autres avant le séchage ou sont atomisées séparément et sont séchées conjointement immédiatement après.

11. Procédé selon la revendication 10, **caractérisé en ce que** la dispersion aqueuse est stabilisée au moyen d'émulsifiants et l'au moins une autre dispersion contient dans l'eau un excédent de colloïde protecteur polymère organique soluble dans l'eau ou un colloïde protecteur de ce type est ajouté, dans lequel le colloïde protecteur polymère organique soluble dans l'eau possède une teneur en acides monocarboxyliques et dicarboxyliques ainsi qu'en leurs anhydrides inférieurs à 50 % en mol. et n'est pas constitué de condensats aromatiques d'acide sulfonique.

12. Poudre redispersible dans l'eau pouvant être obtenue selon le procédé selon au moins l'une quelconque des revendications 1 à 9.

13. Formulation de mortier sec comprenant la poudre selon la revendication 12, au moins un liant à prise hydraulique et des additifs de formulation de mortier choisis parmi le groupe des charges, des liants organiques, des additifs de commande de rhéologie et des additifs de commande d'hydratation.

14. Formulation de mortier sec selon la revendication 13, dans laquelle la poudre selon la revendication 12 est employée en une quantité allant de 0,01 à 25 % en poids, par rapport au liant à prise hydraulique.

15. Utilisation de la formulation de mortier sec selon la revendication 13 ou 14 en tant que mortier de protection complète contre la chaleur, mortier d'étanchéité, enduit de plâtre et/ou de chaux et/ou de ciment, mortier de pulvérisation et/ou de réparation, béton de pulvérisation et/ou de réparation, béton à base de ciment polymère (PCC), béton de pulvérisation à base de ciment polymère (S-PCC), colle à joints, mortier Plywood, mortier pour des ponts d'adhérence, colle à parquet à base de ciment, apprêt en ciment, colle à carrelage, matière de ragréage et/ou mastic.
